# EUROPEAN PATENT SPECIFICATION

(11) **EP 3 993 444 B1**
(45) Date of publication and mention of the grant of the patent: **23.09.2026**
(21) Application number: 21202546.4
(22) Date of filing: 13.10.2021
(51) Int. Cl.: H04R 17/00

(54) **QUIET FLIGHT DECK COMMUNICATION USING ULTRASONIC PHASED ARRAY**
GERÄUSCHARME FLUGDECKKOMMUNIKATION UNTER VERWENDUNG EINER PHASENGESTEUERTEN ULTRASCHALLANORDNUNG
COMMUNICATION SILENCIEUSE DE POSTE DE PILOTAGE UTILISANT UN RÉSEAU À COMMANDE DE PHASE À ULTRASONS

(30) Priority: 28.10.2020 US 202017082858
(43) Date of publication of application: 04.05.2022
(73) Proprietor: Gulfstream Aerospace Corporation, Savannah, Georgia 31402 (US)
(72) Inventor: BOHANAN, Scott, Savannah, 31402 (US); WANG, Tongan, Savannah, 31402 (US); JORDAN, Jim, Savannah, 31402 (US)
(74) Representative: Ingrassia, Fisher & Lorenz UK Ltd.

(56) References cited:
- DE-A1- 102005 058 826
- US-A1- 2005 207 590
- US-A1- 2005 248 233
- ANONYMOUS: "Phased array - Wikipedia", 12 October 2020 (2020-10-12), XP093324681, Retrieved from the Internet <URL:https://en.wikipedia.org/w/index.php?title=Phased_array&oldid=983097005> [retrieved on 20251013]
- ANONYMOUS: "The beam spread of an ultrasonic probe in the far zone - TWI", 18 September 2020 (2020-09-18), XP093324950, Retrieved from the Internet <URL:https://web.archive.org/web/20200918201617/https://www.twi-global.com/technical-knowledge/faqs/faq-what-factors-influence-the-beam-spread-of-an-ultrasonic-probe-in-the-far-zone> [retrieved on 20251014]

## Description

### TECHNICAL FIELD

The disclosure relates generally to communication systems. More particularly, the disclosure relates to an ultrasonic phased array speaker system to allow pilots to communicate with air traffic control towers and other parties.

### BACKGROUND

The cockpit of an aircraft can be quite a noisy environment. At potentially numerous times throughout the flight the pilot or copilot, seated in this noisy environment, will need to communicate with each other, and to receive and communicate important information by radio with air traffic control (ATC), clearly and accurately so that all parties understand. Currently this has been done through the headset. The headset has the advantage of delivering the air traffic control instructions directly to the pilot's (and copilot's) ears and transmitting the pilot's or copilot's communications back to ATC through a close-talk microphone positioned near the pilot's or copilot's mouth.

Thus traditionally, aircraft pilots and copilots have worn headsets during flight, comprising noise isolating or active noise cancelling headsets to which a boom microphone is attached. Such headsets typically employ a close-talk microphone having a pickup pattern designed to pick up the pilot's voice while rejecting sounds originating from other directions. These have worked well, but there are problems.

One problem with conventional headsets is that they can become uncomfortable to wear, particularly for long periods of time. The ear cups on many headsets apply pressure to the sides of the face and sometimes the ears, which can interfere with blood flow if worn too tightly. The air inside the ear cups also become very warm and stale while wearing, thus pilots sometimes need to remove the headsets to give their ears some fresh air.

Also, because they block out much of the ambient cockpit sound, the pilot and copilot may need to take the headsets off in order to hold conversations with others within the cockpit, such as flight attendants or other personnel, who are not also wearing headsets.

In the conventional aircraft, the headset serves a highly important communication function, but it is not the only system within the aircraft that produces audio sound. Aircraft are also equipped with an alert-signal system, which broadcasts alerts through the flight deck speaker system in all directions. The alert system is necessarily designed to be quite loud, so that it can be heard by pilot and copilot over the ambient noise within the cockpit. However, for business jets, during takeoff and landing, all doors between cockpit and cabin are required to remain open. Thus, these alert signals transmit through the cabin easily, causing unnecessary disturbances to the passengers.

In modern day business aircraft, there is increasing interest in providing the aircraft passengers with a quiet, comfortable environment. However, due to the importance of the flight deck communications and alert-signal system messages, it has heretofore been difficult to keep the cockpit sounds from propagating into the passenger cabin. Thus conventionally, pilots have been consigned to wearing headsets, and some propagation of alert system messages into the passenger cabin has been unavoidable.

It is known to replace headphones by parametric speaker arrays, e.g., in the context of aircrafts (see, e.g., DE 10 2005 058826 A1, US 2005/248233 A1, US 2005/207590 A1).

### SUMMARY

The disclosed pilot communication system takes a different approach that reduces pilot and copilot reliance on headsets to communicate with each other and with air traffic control (ATC). Using a phased array ultrasonic transducer speaker system pilots and copilots can easily communicate with each other in the noisy cockpit and can have clear and accurate communications with air traffic control, without the need to wear headsets. The system provides an enhanced signal-to-noise ratio (SNR) toward the pilot and copilot while minimizing the signals to other directions, i.e. the passenger cabin, so the pilot and copilot can readily hear conversations, ATC communications and alert sounds, without disturbing passengers in the cabin, even when the cockpit-cabin doors are open.

Instead of using conventional speakers to fill the cockpit with loud communication system audio sufficient to overcome the ambient noise, the system uses an ultrasonic transducer array that directs the system audio in a narrow ultrasonic beam to the pilot's ears. The ultrasonic beam employs an ultrasonic carrier wave at a frequency that is inaudible to the human ear. The system audio is modulated upon this ultrasonic carrier wave and thus travels with the carrier wave in the direction of the beam. As the beam passes through air molecules in route to the pilot's ears, the modulated wave becomes naturally demodulated through interaction with the air molecules. Because of this natural demodulation, the pilot is able to hear the demodulated audio signal, sounding much as if it had come from a conventional speaker.

In a first aspect, the present invention relates to a pilot communication system as defined in claim 1.

In a second aspect, the present invention relates to an aircraft as defined in claim 7.

In a third aspect, the present invention relates to a method of communicating audio information to the pilot of an aircraft as defined in claim 8.

### BRIEF DESCRIPTION OF THE DRAWINGS

The drawings described herein are for illustrative purposes only of selected embodiments and not all possible implementations. The particular choice of drawings is not intended to limit the scope of the present disclosure.
Fig. 1 is a top down view of the flight deck of an exemplary aircraft, showing one possible placement of the ultrasonic phased array speaker system;
Fig. 2 is a cutaway view of a portion of the flight deck of Fig. 1 as it would appear to the pilot and copilot when seated, and also showing one possible placement of the ultrasonic phased array speaker system;
Figs. 3a - 3c are waveform diagrams illustrating different modulation techniques for implementing the ultrasonic phased array;
Fig. 4 is diagram illustrating how an inserted time delay is used to direct transducer beam patterns in the pilot communication system;
Fig. 5 is a schematic diagram illustrating one embodiment of the ultrasonic phased array transducer or speaker system;
Fig. 6 is a schematic diagram illustrating further details of the ultrasonic phased array transducer or speaker system;
Fig. 7a-7c are schematic diagrams illustrating other embodiments of the ultrasonic phased array transducer or speaker system;
Figs. 8a - 8g are plan views of some different transducer or speaker placement embodiments usable with the pilot communication system.

### DETAILED DESCRIPTION

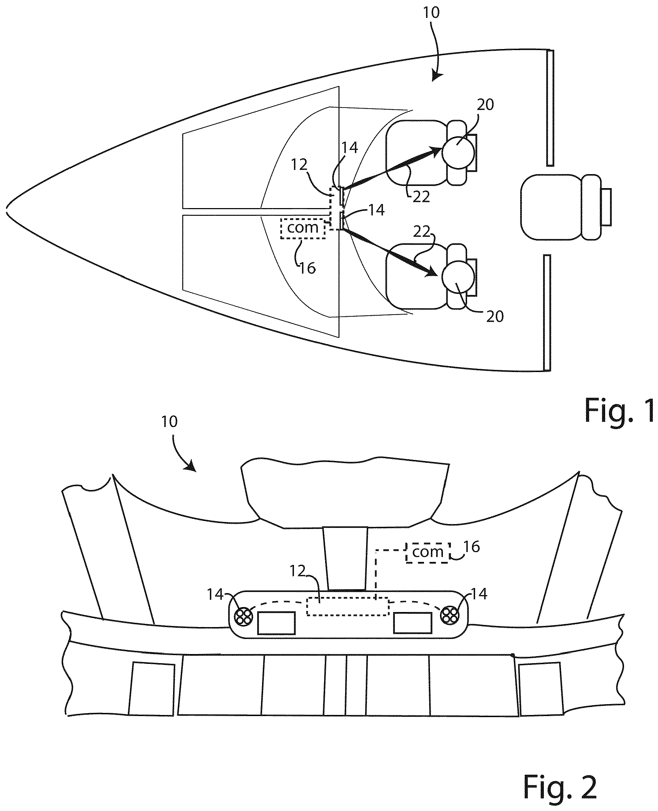

Referring to Figs. 1 and 2, an embodiment of the ultrasonic phased array communication system 12 is deployed on the flight deck 10 of an aircraft. The ultrasonic phased array communication system electronics package may be placed in any convenient location, thus the illustrated location at 12 is merely exemplary. The system includes an ultrasonic transducer array 14 (two such arrays are illustrated here, one for pilot and one for copilot). The ultrasonic phased array communication system is coupled to the aircraft avionics communication system 16 to receive audio signals, such as voiced radio communications from air traffic control, intercom messages from flight attendants, aircraft audible alert messages, and the like. In Figs. 1 and 2 the avionics communication system 16 has been shown in dotted lines to indicate that the physical location of that system can be deployed anywhere convenient.

The ultrasonic phased array communication system 12 and its associated transducer arrays 14 supply narrow beams 22 of ultrasonic acoustic energy directly to each pilot 20. Each beam comprises an ultrasonic acoustic carrier wave that has been modulated to carry the audio signals from the avionics communication system. The ultrasonic carrier, in an exemplary frequency range from about 30 kHz to 150 kHz, is well above the range of human hearing and is, itself, inaudible.

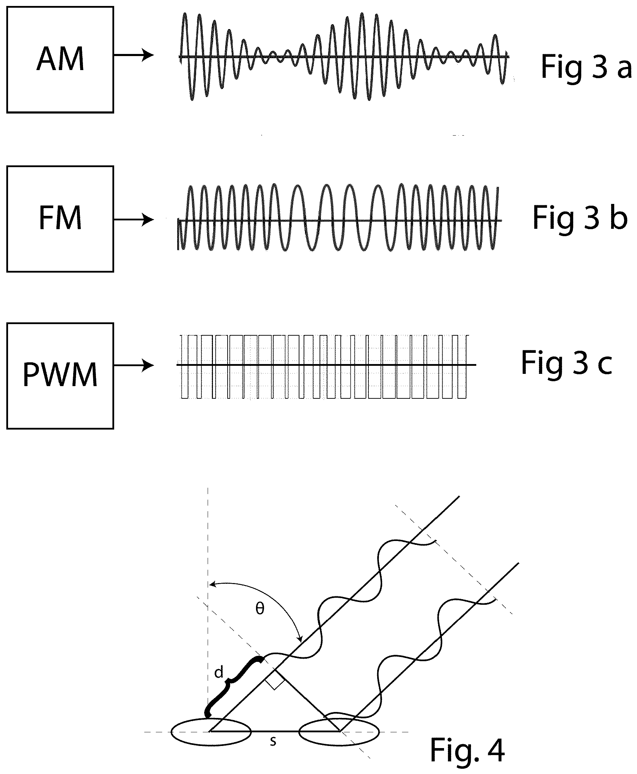

While a number of different modulation modes are possible, three have been illustrated in Figs. 3a - 3c. Fig. 3a illustrates amplitude modulation (AM), where the audio signal from the aircraft avionics communication system is used to modulate the amplitude of the ultrasonic carrier. Fig. 3b illustrates frequency modulation (FM), where the audio signal from the aircraft avionics communication system is used to modulate the frequency of the ultrasonic carrier. Fig. 3c illustrates one form of pulse width modulation (PWM) where the audio signal from the aircraft avionics communication system modulates the duty cycle of the ultrasonic carrier. In the AM and FM modulation cases, the ultrasonic carrier is typically based on a sinusoidal waveform, as illustrated. The PWM case offers other options, where the carrier may take the form of a square wave of varying duty cycle, and us thus well suited for amplification using highly efficient class D amplifiers.

Regardless of the modulation mode chosen, the modulated ultrasonic beam becomes naturally demodulated by passage through the air. Thus, as a natural consequence of interacting with air molecules in the acoustic space traversed by the beam, the signal is demodulated thus rendering the audio signal containing the message from the avionics communication system audible to the pilot 20.

The ultrasonic phased array preferably comprises a tightly grouped plurality of individual acoustic transducers, such as piezoelectric transducers. The close transducer spacing, combined with the high frequency ultrasonic carrier produces a narrow beam that concentrates the acoustic energy so that it travels preferably line-of-sight from transducer array directly to the pilot. In a practical embodiment, five watts of electrical power to the transducer array will produce a sound pressure level (SPL) on the order up to 115 dB or higher. More electrical power may be used if higher sound pressure levels (e.g., 140 dB) are desired. In such a system the acoustic signal delivered may have a frequency range from about 500 Hz to 4 kHz, which is usually adequate for good intelligibility of speech signals.

As the beam travels outwardly from each ultrasonic transducer array, there is minimal beam divergence within the first 2-3 meters from the transducer. Thus the ultrasonic beam will remain very directional to the pilot location and due to the relatively confined geometry of the cockpit, the beam will hit one or more surfaces (sidewalls, ceiling, floor, pilot's clothing, etc.) and become attenuated long before it reaches the cabin. Thus the pilot is able to hear the demodulated audio from his or her seat on the flight deck, but persons seated in the aircraft passenger cabin will not, due to ultrasonic wave absorption from impacting with sound absorbing surfaces, such as the sound absorbing wall and ceiling panels and carpeting, or from passenger clothing.

In one embodiment, the phased array may be electronically fed with individual signals having carefully controlled individual time or phase delays to affect electronic steering of the beam. To better understand how beam steering is accomplished, refer to Fig. 4, which illustrates two transducers (e.g., speakers) arranged in a linear array. When both transducers are fed coherently with the same sinusoidal ultrasonic carrier signal, the carrier waves emanating from each transducer are in phase and the sound will appear to come straight on from the plane of the transducers, i.e., from a direction perpendicular to the horizontal axis (as seen in Fig. 4).

However, when one of the transducers is fed by a signal that is delayed by a time increment dt, constructive and destructive interference between the respective wavefronts of the two transducers will produce the loudest collective sound in an angled direction, no longer perpendicular but at an angle θ to the horizontal axis, as shown in Fig. 4. The angled direction can be computed trigonometrically, by knowing the wavelength of the audio frequency. Frequency (f) and wavelength (λ) which are related to the phase speed (v), according to the following equation:$f = v / λ$

To steer the beam in the direction (angle θ) illustrated in Fig. 4, the signal from transducer on the left (in Fig. 4) is delayed by a time dt computed to account for the fact that the signal from transducer on the left (in Fig. 4 must traverse the additional distance d, in order for its wavefront to be in phase with the wavefront from the transducer on the right (in Fig. 4). This delay dt can be computed for a given angle θ using the following trigonometric relationship:$dt = s sin \left(θ\right) / c$ where s is the transducer separation and c is the speed of sound in the air.
Control over timing (i.e., control over the phase of individual transducer waves) can be used not only to steer the collective ultrasonic beam in a particular direction but also to focus the individual transducer waves onto a desired point. The equation is the same: dt=dx/c. where dx is the difference between the distances from the transducers to the desired point and c is the speed of sound.

When designing the spacing between transducers, it is recommended to choose a spacing that avoids formation of strong grating lobes or side lobes. Grating lobes are a consequence of having large and uniform distances between the individual transducer elements in relation to the acoustic wavelength. Therefore, preferably small spacing (relative to ultrasonic wavelength) should be chosen, so that grating lobes are minimized. As noted above a spacing of less than 1/2 wavelength of the ultrasonic carrier may be used to minimize grating lobes or side lobes.

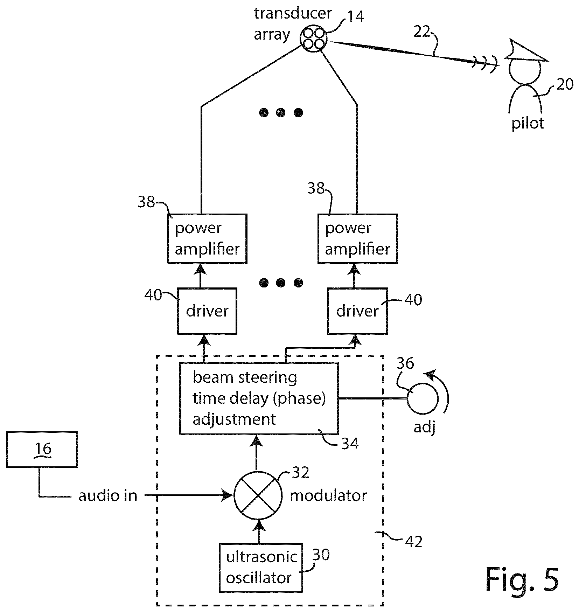

Referring now to Fig. 5, an exemplary electronic circuit for producing the modulated ultrasonic beam will now be described. Audio input from the avionics communication system 16 is mixed with the ultrasonic carrier from ultrasonic oscillator 30 in a modulator 32, to produce the modulated ultrasonic carrier. The modulator 32 is configured to implement a predefined modulation mode, such as one of those illustrated in Figs. 3a - 3c.

If electronic beam steering is desired, this effect is applied by the time delay (phase delay) adjustment circuit 34. The adjustment circuit works by subdividing the modulated ultrasonic carrier into multiple channels, one for each of the individual transducers making up the transducer array 14. The adjustment circuit 34 selectively inserts a calculated time delay into one or more of the individual channels to produce the beam steering effect illustrated in Fig. 4. If desired, an adjustment control or interface 36 is provided to allow the beam to be steered to a desired direction, either manually or by automated control. Such an adjustment is useful, for example, to fine tune the beam direction so that the ultrasonic beam 22 is accurately directed to the pilot 20.

In order to produce sufficient sound pressure level at the pilot's location, the circuit includes an amplification stage for each of the multiple channels. This may be implemented using suitable power amplifiers 38 (one for each channel). Intermediate driver circuits 40 may be utilized to provide a suitable match between the impedance of the time delay adjustment circuit 34 and the power amplifiers 40.

If desired, one or more of the illustrated components may be implemented using a field programmable gate array (FPGA) circuit 42. In such an implementation, the ultrasonic oscillator, modulator and time delay functions are implemented using logic gates that are programmatically defined within the FPGA to perform the functions described above. While an FPGA circuit has been illustrated, the control hardware may be implemented using an FPGA, a microprocessor, a digital signal processor (DSP), or combinations thereof.

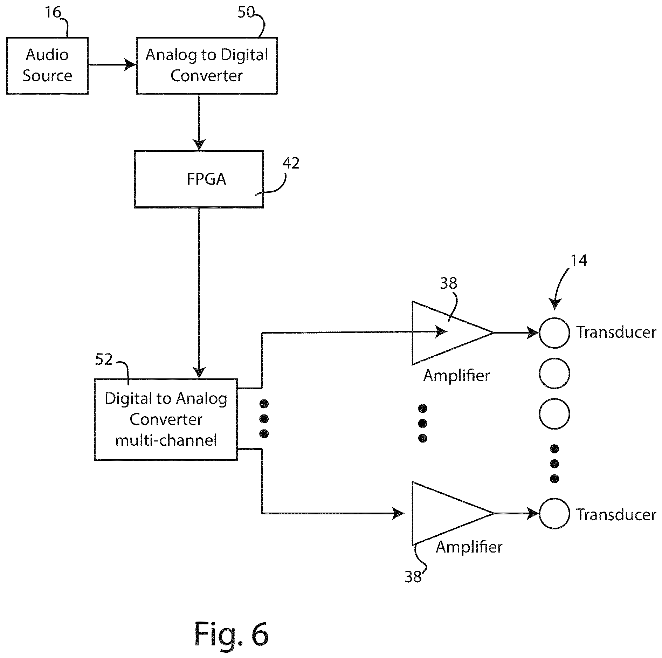

Referring to Fig. 6, the FPGA implementation is shown in greater detail. The audio input supplied by the avionics communication system 16 is converted from analog to digital form using analog to digital converter 50. The converted digital audio is then fed to the FPGA 42, which produces the ultrasonic modulated signal using an internally generated ultrasonic carrier that has been modulated using the supplied digital audio. The FPGA produces a multichannel output (one for each of the individual transducers comprising the ultrasonic transducer array 14.

The multichannel output from FPGA 42 is then fed to a multichannel digital to analog converter circuit 52, which converts each of the data streams into analog signals. These analog signals are then fed to the amplifiers 38 to drive the transducers.

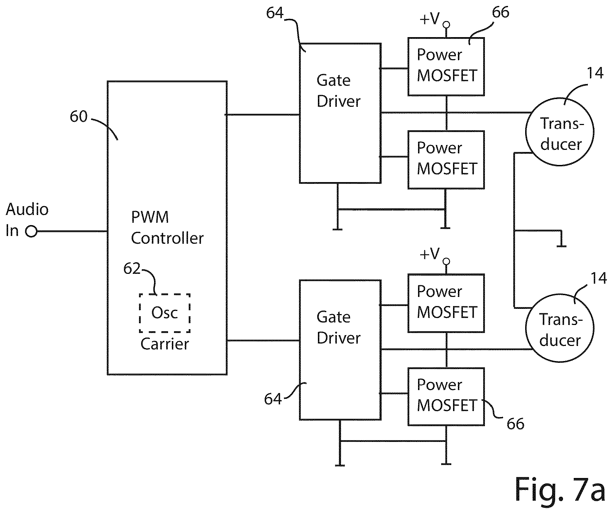

As noted above, the ultrasonic beam can be modulated using a non-sinusoidal carrier, such as the pulse width modulated carrier depicted in Fig. 3c. One exemplary circuit to accomplish such modulation is illustrated in Fig. 7a. The circuit of Fig. 7a can be implemented using either discrete components, such as dedicated integrated circuits, or it can be implemented to perform the PWM function using the FPGA 42. As depicted in Fig. 7a, a pulse width modulation controller circuit 60 may be utilized. Such PWM controller circuits are commonly used to implement switching power supplies, but can be used to produce the modulated ultrasonic waveforms used by the disclosed flight deck communication system.

The output of the PWM controller circuit 60 may be fed to suitable gate driver circuits (one for each transducer 14), as needed to provide proper voltage and sufficient current to drive the power MOFET transistor switches 66. In the illustrated circuit, a pair of power MOSFET transistors is used for each transducer 14, operating in push-pull configuration to achieve higher power to the transducer. The circuit could also be implemented using N-channel FETs with no P-channel FETs.

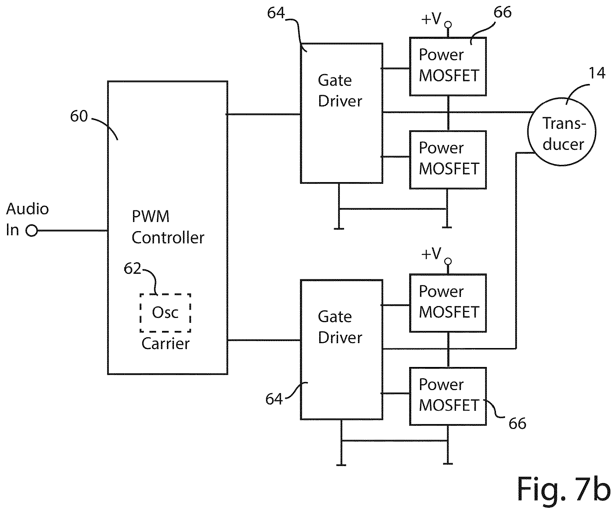

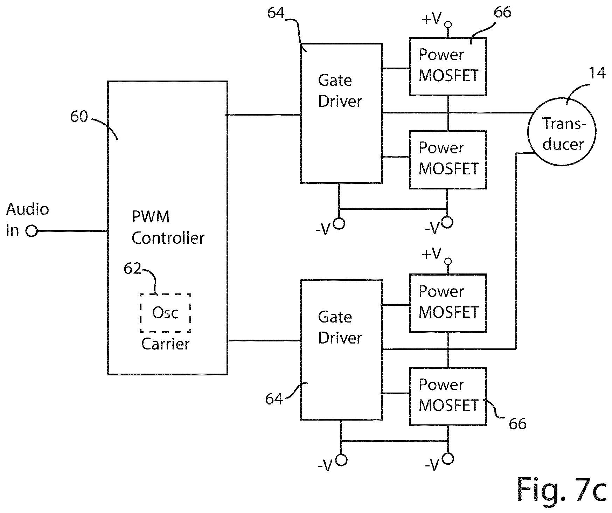

Fig. 7b depicts an alternate embodiment based on a full H-bridge configuration. Fig. 7c depicts a further alternate embodiment based on a full H-bridge configuration employing +V and -V power supply rails.

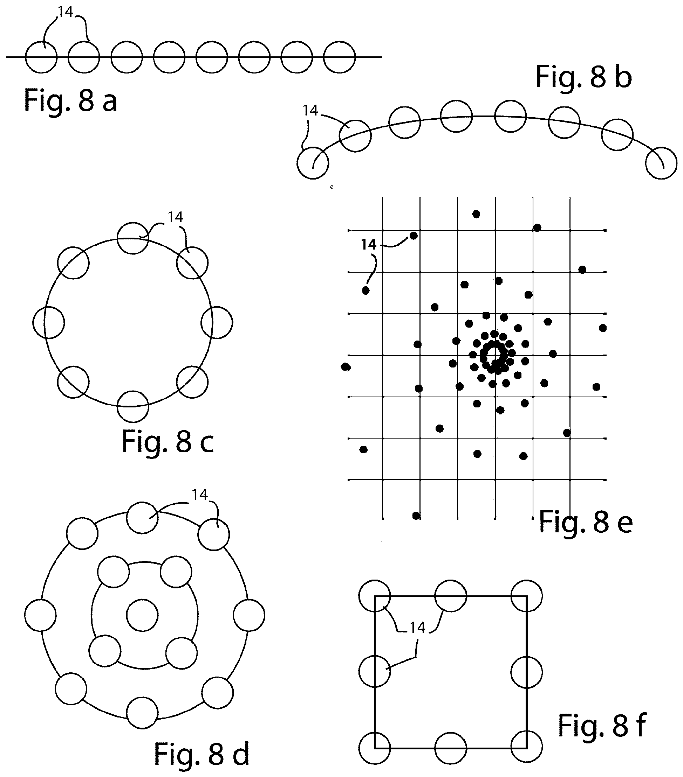

Several different spaced-apart transducer configuration patterns have been illustrated in Figs. 8a through 8g. Other configuration patterns are also possible. These configurations patterns may be used singly or in combination. The transducers 14 are each arranged according to a predefined configuration pattern, such as but not limited to, those examples shown in Figs. 8a - 8g

Fig. 8a illustrates a linear array, where the transducers are centered along a common straight line. The transducers are spaced apart according to a predefined spacing pattern (e.g., equally spaced, logarithmically spaced, or with other spacing) and each is preferably fed by a dedicated audio signal transmission line coupled to the time delay adjustment circuit. In this way, the time delay adjustment circuit is able to send or receive a precisely timed audio signal to each transducer. The effect of such precisely timed audio signals is to produce an array beam pattern.

In the case of the linear array shown in Fig. 8a, the beam pattern can be controlled by the time delay adjustment circuit to provide one-dimensional beam steering. Thus, the linear array is well suited for deployment in flight deck locations where the linear array lies generally in a plane that includes the pilot's and copilot's heads.

Fig. 8b illustrates a curved or curvilinear array, where the transducers are centered along a common curved line. As with the linear array of Fig. 8a, the transducers may be equally spaced apart, logarithmically spaced, or spaced apart with bilateral symmetry. The curvilinear array is well suited for deployment in portions of the cockpit having naturally curved surfaces, as dictated by the shape of the fuselage. As with the linear array, the transducers of the curvilinear array may be fed by a dedicated audio signal transmission line coupled to the time delay adjustment circuit.

Fig. 8c illustrates a circular array. The transducers are preferably equally spaced, each fed by a dedicated audio signal transmission line coupled to the time delay adjustment circuit. The circular array is well suited for placement on the ceiling of the cockpit, such as above and forward of the pilots' heads. The circular array can provide two-dimensional beam steering.

Fig. 8d illustrates a concentric circular array. The transducers are preferably equally spaced around each concentric circle, each fed by a dedicated audio signal transmission line coupled to the time delay adjustment circuit.

Fig. 8e illustrates a spiral array where the transducers 14 are spaced according to a logarithmic pattern. The transducers are each fed by a dedicated audio signal transmission line coupled to the time delay adjustment circuit. The spiral array may provide different transducer spacings. This is a natural consequence of following a spiral pattern; however, in addition, the individual transducers may be spaced apart based on a logarithmic relationship.

Fig. 8f illustrates a square or rectilinear array. The transducers are each fed by a dedicated audio signal transmission line coupled to the time delay adjustment circuit. The square array is similar to the circular array, providing two-dimensional beam steering. The square array is suited in applications where packaging constraints dictate.

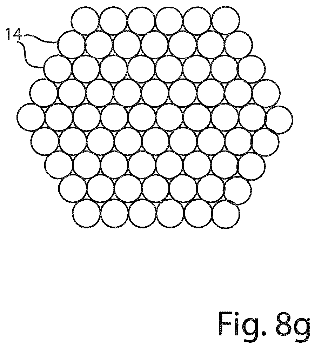

Fig. 8g illustrates a row cluster configuration in which the transducers 14 are tightly packed into a geometric shape. This configuration has the advantage of concentrating the acoustic energy into a small region to increase acoustic signal amplitude.

While the transducer spacings shown in Fig. 8a-8d are uniform, in practice, the spacing between the transducers could be constant, linear, logarithmic or based on other factors.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment as contemplated herein. It should be understood that various changes may be made in the function and arrangement of elements described in an exemplary embodiment without departing from the scope of the invention as set forth in the appended claims.

## Claims

1. A pilot communication system for an aircraft flight deck (10) that defines an acoustic space enclosing air molecules and having at least one pilot seating location (20) disposed therein, and that includes an avionics communication system (16), the pilot communication system comprising:
an acoustic transducer array (14) comprising a plurality of transducers arranged in a spatial configuration based on a predetermined spacing, wherein the acoustic transducer array (14) is configured to be disposed on the flight deck (10) and positioned to emit sound waves in the direction of the at least one pilot seating location (20);
an ultrasonic oscillator (30) configured to generate an ultrasonic carrier wave having an ultrasonic carrier frequency,
a modulator circuit (32) configured to receive an audio signal from the avionics communication system (16) and the ultrasonic carrier wave from the ultrasonic oscillator (30), and also configured to drive the acoustic transducer array (14), and
a multichannel time delay insertion circuit (34) coupled between the modulator circuit (32) and the transducer array (14);
wherein the modulator circuit (32) is configured to supply to the acoustic transducer array (14) an electrical signal having the ultrasonic carrier frequency modulated by the audio signal, thereby generating a modulated ultrasonic signal as a beam (22) of ultrasonic acoustic energy having a beam width that is controlled by the ultrasonic carrier frequency generated by the ultrasonic oscillator (30), and wherein the beam (22) of ultrasonic acoustic energy is demodulated naturally by traversal through air molecules between the acoustic transducer array (14) and the at least one pilot seating location (20),
wherein the multichannel time delay insertion circuit (34) is configured to selectively insert predetermined time delays into the feed of each of the plurality of transducers to steer the beam (22); and
wherein the beam (22) has a divergence angle based on the predetermined spacing and the ultrasonic carrier frequency such that the audio signal is audible at the at least one pilot seating location (20) and substantially inaudible in a passenger cabin area within the aircraft.

2. The pilot communication system of claim 1, wherein the time delay insertion circuit (34) includes an adjustment mechanism (36) to alter the inserted time delays to adjust the pointing direction of the beam (22).

3. The pilot communication system of claims 1 or 2, wherein the ultrasonic carrier frequency defines a carrier wavelength and wherein the acoustic transducer array (14) comprises the plurality of transducers arranged in the array of individual transducers each spaced apart a distance less than or equal to one-half the carrier wavelength.

4. The pilot communication system of any one of claims 1 to 3, wherein the spatial configuration is selected from the group consisting of: linear, curvilinear, circular, concentric circular, square, row cluster array, and spiral and combinations thereof.

5. The pilot communication system of any one of claims 1 to 4 for an aircraft flight deck (10) that has at least two pilot seating locations (20) disposed therein, further comprising:
a first acoustic transducer array (14) disposed on the flight deck and positioned to emit sound waves in a direction of one of the at least two pilot seating locations, and a second acoustic transducer array (14) disposed on the flight deck and positioned to emit sound waves in a direction of another of the at least two pilot seating locations.

6. The pilot communication system of any one of claims 1 to 5, wherein the ultrasonic oscillator (30), the modulator circuit (32) and the multichannel time delay insertion circuit (34) are implemented using logic gates that are programmatically defined within a field programmable gate array (FPGA) circuit (43), a microprocessor, a digital signal processor (DSP), or combinations thereof.

7. An aircraft comprising the pilot communication system of any one of claims 1 to 6.

8. A method of communicating audio information to a pilot (20) of an aircraft, comprising:
obtaining an audio signal from an avionics communication system (16) and obtaining an ultrasonic carrier wave having an ultrasonic carrier frequency from an ultrasonic oscillator (30) configured to generate the ultrasonic carrier wave having the ultrasonic carrier frequency;
modulating the audio signal upon the ultrasonic carrier wave to produce a modulated ultrasonic signal;
delivering the modulated ultrasonic signal through an acoustic transducer array (14) to the pilot (20) as an ultrasonic acoustic beam (22) that becomes demodulated naturally by traversal through the air between the transducer array (14) and the pilot (20), thus rendering the audio signal audible to the pilot (20),
wherein the acoustic transducer array (14) comprises a plurality of transducers arranged in a spatial configuration based on a predetermined spacing,
wherein the acoustic transducer array (14) steers the direction of the beam (22) by varying a relative time at which the modulated ultrasonic signal is delivered to each of the plurality of transducers,
controlling a beam width of the beam (22), wherein the beam width is controlled by the ultrasonic carrier frequency generated by the ultrasonic oscillator (30); and
producing the beam (22) to have a divergence angle based on the predetermined spacing and the ultrasonic carrier frequency such that the audio signal is audible at the pilot (20) and substantially inaudible in a passenger cabin area within the aircraft.

9. The method of claim 8, wherein the audio signal carries speech at frequencies audible to the human ear and wherein the ultrasonic carrier frequency is above the frequency range of human hearing.

10. The method of claims 8 or 9, wherein the step of modulating the audio signal upon the ultrasonic carrier wave is performed by electronically multiplying the audio signal and the ultrasonic carrier wave.

11. The method of any one of claims 8 to 10, wherein the step of modulating the audio signal upon the ultrasonic carrier wave is performed using a modulation modality selected from the group consisting of amplitude modulation, frequency modulation and pulse width modulation.

## Patentansprüche

1. Ein Pilotenkommunikationssystem für das Flugdeck (10) eines Flugzeugs, das einen akustischen Raum definiert, der Luftmoleküle einschließt und mindestens einen darin angeordneten Pilotensitzplatz (20) aufweist, und das ein Avionik-Kommunikationssystem (16) beinhaltet, wobei das Pilotenkommunikationssystem Folgendes umfasst:
ein akustisches Wandlerarray (14), das eine Vielzahl von Wandlern umfasst, die in einer räumlichen Konfiguration basierend auf einem vorbestimmten Abstand angeordnet sind, wobei das akustische Wandlerarray (14) konfiguriert ist, um auf dem Flugdeck (10) angeordnet und so positioniert zu werden, dass es Schallwellen in die Richtung des mindestens einen Pilotensitzplatzes (20) aussendet;
einen Ultraschalloszillator (30), der konfiguriert ist, um eine Ultraschallträgerwelle mit einer Ultraschallträgerfrequenz zu erzeugen;
eine Modulatorschaltung (32), die konfiguriert ist, um ein Audiosignal von dem Avionik-Kommunikationssystem (16) und die Ultraschallträgerwelle von dem Ultraschalloszillator (30) zu empfangen, und die auch konfiguriert ist, um das akustische Wandlerarray (14) anzusteuern;
und eine mehrkanalige Zeitverzögerungseinfügungsschaltung (34), die zwischen der Modulatorschaltung (32) und dem Wandlerarray (14) gekoppelt ist;
wobei die Modulatorschaltung (32) konfiguriert ist, um dem akustischen Wandlerarray (14) ein elektrisches Signal zuzuführen, das die mit dem Audiosignal modulierte Ultraschallträgerfrequenz aufweist, wodurch ein moduliertes Ultraschallsignal als ein Strahl (22) von akustischer Ultraschallenergie mit einer Strahlbreite erzeugt wird, die durch die von dem Ultraschalloszillator (30) erzeugte Ultraschallträgerfrequenz gesteuert wird, und wobei der Strahl (22) von akustischer Ultraschallenergie durch den Durchgang durch Luftmoleküle zwischen dem akustischen Wandlerarray (14) und dem mindestens einen Pilotensitzplatz (20) natürlich demoduliert wird;
wobei die mehrkanalige Zeitverzögerungseinfügungsschaltung (34) konfiguriert ist, um selektiv vorbestimmte Zeitverzögerungen in die Einspeisung jedes der Vielzahl von Wandlern einzufügen, um den Strahl (22) zu lenken;
und wobei der Strahl (22) einen Divergenzwinkel aufweist, der auf dem vorbestimmten Abstand und der Ultraschallträgerfrequenz basiert, sodass das Audiosignal an dem mindestens einen Pilotensitzplatz (20) hörbar und in einem Passagierkabinenbereich innerhalb des Flugzeugs im Wesentlichen unhörbar ist.

2. Das Pilotenkommunikationssystem nach Anspruch 1, wobei die Zeitverzögerungseinfügungsschaltung (34) einen Einstellmechanismus (36) beinhaltet, um die eingefügten Zeitverzögerungen zu ändern, um die Ausrichtungsrichtung des Strahls (22) anzupassen.

3. Das Pilotenkommunikationssystem nach Anspruch 1 oder 2, wobei die Ultraschallträgerfrequenz eine Trägerwellenlänge definiert und wobei das akustische Wandlerarray (14) die Vielzahl von Wandlern umfasst, die in dem Array aus einzelnen Wandlern angeordnet sind, die jeweils in einem Abstand voneinander beabstandet sind, der kleiner als oder gleich der Hälfte der Trägerwellenlänge ist.

4. Das Pilotenkommunikationssystem nach einem der Ansprüche 1 bis 3, wobei die räumliche Konfiguration ausgewählt ist aus der Gruppe bestehend aus: linear, krummlinig, kreisförmig, konzentrisch kreisförmig, quadratisch, Reihen-Cluster-Array und spiralförmig sowie Kombinationen davon.

5. Das Pilotenkommunikationssystem nach einem der Ansprüche 1 bis 4 für das Flugdeck (10) eines Flugzeugs, das mindestens zwei darin angeordnete Pilotensitzplätze (20) aufweist, ferner umfassend: ein erstes akustisches Wandlerarray (14), das auf dem Flugdeck angeordnet und so positioniert ist, dass es Schallwellen in eine Richtung von einem der mindestens zwei Pilotensitzplätze aussendet, und ein zweites akustisches Wandlerarray (14), das auf dem Flugdeck angeordnet und so positioniert ist, dass es Schallwellen in eine Richtung eines anderen der mindestens zwei Pilotensitzplätze aussendet.

6. Das Pilotenkommunikationssystem nach einem der Ansprüche 1 bis 5, wobei der Ultraschalloszillator (30), die Modulatorschaltung (32) und die mehrkanalige Zeitverzögerungseinfügungsschaltung (34) unter Verwendung von Logikgattern implementiert sind, die programmatisch innerhalb einer feldprogrammierbaren Gate-Array (FPGA)-Schaltung (43), eines Mikroprozessors, eines digitalen Signalprozessors (DSP) oder Kombinationen davon definiert sind.

7. Ein Flugzeug, das das Pilotenkommunikationssystem nach einem der Ansprüche 1 bis 6 umfasst.

8. Ein Verfahren zum Kommunizieren von Audioinformationen an einen Piloten (20) eines Flugzeugs, umfassend:
Beziehen eines Audiosignals von einem Avionik-Kommunikationssystem (16) und Beziehen einer Ultraschallträgerwelle, die eine Ultraschallträgerfrequenz aufweist, von einem Ultraschalloszillator (30), der konfiguriert ist, um die Ultraschallträgerwelle mit der Ultraschallträgerfrequenz zu erzeugen;
Modulieren des Audiosignals auf die Ultraschallträgerwelle, um ein moduliertes Ultraschallsignal zu erzeugen;
Zuführen des modulierten Ultraschallsignals durch ein akustisches Wandlerarray (14) an den Piloten (20) als ein akustischer Ultraschallstrahl (22), der durch den Durchgang durch die Luft zwischen dem Wandlerarray (14) und dem Piloten (20) natürlich demoduliert wird, wodurch das Audiosignal für den Piloten (20) hörbar gemacht wird;
wobei das akustische Wandlerarray (14) eine Vielzahl von Wandlern umfasst, die in einer räumlichen Konfiguration basierend auf einem vorbestimmten Abstand angeordnet sind;
wobei das akustische Wandlerarray (14) die Richtung des Strahls (22) lenkt, indem eine relative Zeit, zu der das modulierte Ultraschallsignal an jeden der Vielzahl von Wandlern zugeführt wird, variiert wird;
Steuern einer Strahlbreite des Strahls (22), wobei die Strahlbreite durch die von dem Ultraschalloszillator (30) erzeugte Ultraschallträgerfrequenz gesteuert wird;
und Erzeugen des Strahls (22), sodass er einen Divergenzwinkel aufweist, der auf dem vorbestimmten Abstand und der Ultraschallträgerfrequenz basiert, sodass das Audiosignal bei dem Piloten (20) hörbar und in einem Passagierkabinenbereich innerhalb des Flugzeugs im Wesentlichen unhörbar ist.

9. Das Verfahren nach Anspruch 8, wobei das Audiosignal Sprache bei Frequenzen überträgt, die für das menschliche Ohr hörbar sind, und wobei die Ultraschallträgerfrequenz über dem Frequenzbereich des menschlichen Gehörs liegt.

10. Das Verfahren nach Anspruch 8 oder 9, wobei der Schritt des Modulierens des Audiosignals auf die Ultraschallträgerwelle durch elektronisches Multiplizieren des Audiosignals und der Ultraschallträgerwelle durchgeführt wird.

11. Das Verfahren nach einem der Ansprüche 8 bis 10, wobei der Schritt des Modulierens des Audiosignals auf die Ultraschallträgerwelle unter Verwendung einer Modulationsmodalität durchgeführt wird, die aus der Gruppe ausgewählt ist, die aus Amplitudenmodulation, Frequenzmodulation und Pulsweitenmodulation besteht.

## Revendications

1. Un système de communication de pilote pour un poste de pilotage d'aéronef (10) qui définit un espace acoustique renfermant des molécules d'air et ayant au moins un emplacement de siège de pilote (20) disposé à l'intérieur de celui-ci, et qui inclut un système de communication avionique (16), le système de communication de pilote comprenant :
un réseau de transducteurs acoustiques (14) comprenant une pluralité de transducteurs agencés selon une configuration spatiale basée sur un espacement prédéterminé, dans lequel le réseau de transducteurs acoustiques (14) est configuré pour être disposé sur le poste de pilotage (10) et positionné pour émettre des ondes sonores en direction de l'au moins un emplacement de siège de pilote (20);
un oscillateur à ultrasons (30) configuré pour générer une onde porteuse ultrasonore ayant une fréquence porteuse ultrasonore;
un circuit modulateur (32) configuré pour recevoir un signal audio provenant du système de communication avionique (16) et l'onde porteuse ultrasonore provenant de l'oscillateur à ultrasons (30), et également configuré pour piloter le réseau de transducteurs acoustiques (14),
et un circuit d'insertion de retard temporel multicanal (34) couplé entre le circuit modulateur (32) et le réseau de transducteurs (14);
dans lequel le circuit modulateur (32) est configuré pour fournir au réseau de transducteurs acoustiques (14) un signal électrique ayant la fréquence porteuse ultrasonore modulée par le signal audio, générant ainsi un signal ultrasonore modulé sous la forme d'un faisceau (22) d'énergie acoustique ultrasonore ayant une largeur de faisceau qui est commandée par la fréquence porteuse ultrasonore générée par l'oscillateur à ultrasons (30), et dans lequel le faisceau (22) d'énergie acoustique ultrasonore est démodulé naturellement par la traversée à travers les molécules d'air entre le réseau de transducteurs acoustiques (14) et l'au moins un emplacement de siège de pilote (20);
dans lequel le circuit d'insertion de retard temporel multicanal (34) est configuré pour insérer sélectivement des retards temporels prédéterminés dans l'alimentation de chacun de la pluralité de transducteurs afin d'orienter le faisceau (22);
et dans lequel le faisceau (22) présente un angle de divergence basé sur l'espacement prédéterminé et la fréquence porteuse ultrasonore de telle sorte que le signal audio est audible au niveau de l'au moins un emplacement de siège de pilote (20) et
sensiblement inaudible dans une zone de cabine de passagers à l'intérieur de l'aéronef.

2. Système de communication de pilote selon la revendication 1, dans lequel le circuit d'insertion de retard temporel (34) comprend un mécanisme d'ajustement (36) pour modifier les retards temporels insérés afin d'ajuster la direction de pointage du faisceau (22).

3. Système de communication de pilote selon les revendications 1 ou 2, dans lequel la fréquence porteuse ultrasonore définit une longueur d'onde porteuse et dans lequel le réseau de transducteurs acoustiques (14) comprend la pluralité de transducteurs agencés dans le réseau de transducteurs individuels espacés chacun d'une distance inférieure ou égale à la moitié de la longueur d'onde porteuse.

4. Système de communication de pilote selon l'une quelconque des revendications 1 à 3, dans lequel la configuration spatiale est sélectionnée dans le groupe constitué par les configurations : linéaire, curviligne, circulaire, circulaire concentrique, carrée, en réseau de grappes de rangées, et en spirale, ainsi que leurs combinaisons.

5. Système de communication de pilote selon l'une quelconque des revendications 1 à 4 pour un poste de pilotage d'aéronef (10) qui comporte au moins deux emplacements de siège de pilote (20) disposés à l'intérieur de celui-ci, comprenant en outre : un premier réseau de transducteurs acoustiques (14) disposé sur le poste de pilotage et positionné pour émettre des ondes sonores en direction de l'un des au moins deux emplacements de siège de pilote, et un second réseau de transducteurs acoustiques (14) disposé sur le poste de pilotage et positionné pour émettre des ondes sonores en direction d'un autre des au moins deux emplacements de siège de pilote.

6. Système de communication de pilote selon l'une quelconque des revendications 1 à 5, dans lequel l'oscillateur à ultrasons (30), le circuit modulateur (32) et le circuit d'insertion de retard temporel multicanal (34) sont mis en œuvre à l'aide de portes logiques qui sont définies par programmation au sein d'un circuit de réseau de portes programmables in situ (FPGA) (43), d'un microprocesseur, d'un processeur de signal numérique (DSP), ou de leurs combinaisons.

7. Aéronef comprenant le système de communication de pilote selon l'une quelconque des revendications 1 à 6.

8. Procédé de communication d'informations audio à un pilote (20) d'un aéronef, comprenant :
l'obtention d'un signal audio provenant d'un système de communication avionique (16) et l'obtention d'une onde porteuse ultrasonore ayant une fréquence porteuse ultrasonore à partir d'un oscillateur à ultrasons (30) configuré pour générer l'onde porteuse ultrasonore ayant la fréquence porteuse ultrasonore ;
la modulation du signal audio sur l'onde porteuse ultrasonore pour produire un signal ultrasonore modulé ;
la distribution du signal ultrasonore modulé par le biais d'un réseau de transducteurs acoustiques (14) au pilote (20) sous la forme d'un faisceau acoustique ultrasonore (22) qui est démodulé naturellement par la traversée à travers l'air entre le réseau de transducteurs (14) et le pilote (20), rendant ainsi le signal audio audible pour le pilote (20) ;
dans lequel le réseau de transducteurs acoustiques (14) comprend une pluralité de transducteurs agencés selon une configuration spatiale basée sur un espacement prédéterminé,
dans lequel le réseau de transducteurs acoustiques (14) oriente la direction du faisceau (22) en faisant varier un temps relatif auquel le signal ultrasonore modulé est distribué à chacun de la pluralité de transducteurs,
la commande d'une largeur de faisceau du faisceau (22), dans lequel la largeur de faisceau est commandée par la fréquence porteuse ultrasonore générée par l'oscillateur à ultrasons (30) ;
et la production du faisceau (22) pour avoir un angle de divergence basé sur l'espacement prédéterminé et la fréquence porteuse ultrasonore de telle sorte que le signal audio est audible au niveau du pilote (20) et sensiblement inaudible dans une zone de cabine de passagers à l'intérieur de l'aéronef.

9. Procédé selon la revendication 8, dans lequel le signal audio transporte de la parole à des fréquences audibles pour l'oreille humaine et dans lequel la fréquence porteuse ultrasonore est supérieure à la plage de fréquences de l'ouïe humaine.

10. Procédé selon les revendications 8 ou 9, dans lequel l'étape de modulation du signal audio sur l'onde porteuse ultrasonore est effectuée par multiplication électronique du signal audio et de l'onde porteuse ultrasonore.

11. Procédé selon l'une quelconque des revendications 8 à 10, dans lequel l'étape de modulation du signal audio sur l'onde porteuse ultrasonore est effectuée en utilisant une modalité de modulation sélectionnée dans le groupe constitué par la modulation d'amplitude, la modulation de fréquence et la modulation de largeur d'impulsion.
